# EUROPEAN PATENT APPLICATION

(11) **EP 2 182 658 A2**
(43) Date of publication of application: **05.05.2010**
(21) Application number: 09173024.2
(22) Date of filing: 14.10.2009
(51) Int. Cl.: H04B 10/20

(54) **Station device and optical communication system using same**

(30) Priority: 30.10.2008 JP 2008279793
(71) Applicant: Nec Corporation, Tokyo 108-8001 (JP)
(72) Inventor: Saikusa, Naoki, Tokyo (JP)
(74) Representative: Heunemann, Dieter

(57) **Abstract**

A station device is connected to a plurality of subscriber devices and comprises a reception unit that receives signals from the subscriber devices. A reception level measurement unit measures the levels of reception by the reception unit. A transmission instruction unit causes each of the subscriber devices to transmit a pattern for measurement continuing for a predetermined time in an interval when no data is transmitted by the subscriber devices. A recognition control unit controls a signal recognition method for a signal received from the subscriber device based on the reception level of the pattern for measurement transmitted from the subscriber device and measured by the reception level measurement unit.

## Description

This application is based upon and claims the benefit of priority from Japanese patent application No. 2008-279793, filed on October 30, 2008, the disclosure of which is incorporated herein in its entirety by reference.

This invention relates to a station device for use in an optical communication system such as a PON (Passive Optical Network) system or G-PON (Gigabit-PON) system, and also relates to such an optical communication system.

A PON system is generally constructed by connecting a plurality of ONUs (Optical Network Units) functioning as subscriber devices to an OLT (Optical Line Terminal) functioning as a station device through optical transmission paths formed of optical fibers or the like and optical couplers.

The OLT in such an optical communication system recognizes optical signals from the ONUs typically based on a predetermined common reception level.

An example of the related art related to this type of optical communication systems is found in JP-A-2005-20417 (Patent Document 1), which discloses a receiving amplifier. This receiving amplifier detects an optical signal from a subscriber device, reads an optical input intensity value of the detected signal and stores the value in its memory. At a time point before another optical signal input is expected from the same subscriber, the receiving amplifier determines a control value for a gain control circuit based on the stored value.

JP-A- 2001-7868 (Patent Document 2) disclosing a burst signal receiver is another example of the related art related to this type of optical communication systems. This burst signal receiver receives a plurality of burst signals having mutually different reception levels, and stores an optimal threshold voltage in its memory circuit based on the reception levels of the received burst signals. When receiving a corresponding burst signal next time, the burst signal receiver reads out the threshold voltage stored in the memory circuit and determines whether the level is 0 or 1, based on the threshold voltage.

In commonly-used OLT reception circuits, however, the ONUs often have different received light levels from each other, for example due to different distances between the OLT and the ONUs. This leads to requirements for high-speed responsibility to enable quick discrimination of differences in received light level and quick response, as well as wide light receiving dynamic range.

These requirements induce a problem that the designing of the reception circuits becomes difficult, and the circuit scale becomes large.

The techniques described in Patent Documents 1 and 2 above are designed to control the amplification degree or the threshold value based on the intensity of the received signal in actual data transmitted by a subscriber device during a data transmission period.

However, the duration of the actual data continuously transmitted by each of the subscriber devices is short in general. In contrast to this, a data input time period longer than a certain time period is required to measure the reception level.

The techniques of Patent Document and 2 described above have not made any consideration on performing reliable measurement of reception levels to achieve highly accurate reception control.

This invention has been made in view of the circumstances as described above, and it is an object of the invention to provide a station device which is capable of ensuring accurate measurement of reception levels from subscriber devices, and thus capable of achieving highly accurate reception control without significant need of high-speed responsibility or wide light receiving dynamic range.

It is another object of this invention to provide an optical communication system employing the station device as described above.

According to an aspect of the present invention, a station device is used by being connected to a plurality of subscriber devices and comprises a reception unit that receives signals from the subscriber devices, a reception level measurement unit that measures the levels of reception by the reception unit, and a transmission instruction unit that causes each of the subscriber devices to transmit a pattern for measurement continuing for a predetermined time in an interval when no data is transmitted by the subscriber devices. The station device further comprises a recognition control unit that controls a signal recognition method for a signal received from the subscriber device based on the reception level of the pattern for measurement transmitted from the subscriber device and measured by the reception level measurement unit.

According to another aspect of the present invention, a reception control method is for a station device which is used by being connected to a plurality of subscriber devices. The method comprises a transmission instruction step of causing each of the subscriber devices to transmit a pattern for measurement continuing for a predetermined time in an interval when no data is transmitted by the subscriber devices, a reception level measurement step of measuring the reception level of the pattern for measurement, and a recognition control step of controlling a signal recognition method for a signal received from the subscriber device based on the reception level of the pattern for measurement received from the subscriber device and measured by the reception level measurement step.

An optical communication system according to this invention is constructed by connecting a plurality of subscriber devices to the station device according to this invention via optical transmission paths.

According to this invention, accurate measurement of the reception levels from the subscriber devices can be ensured, and thus highly accurate reception control can be achieved without significant need of high-speed responsibility or wide light receiving dynamic range.

An exemplary embodiment of the invention in which a station device, an optical communication system, a reception control method and a reception control program are applied to an OLT of a PON system will be described in detail with reference to the accompanying drawings.
Fig. 1 is a block diagram showing a configuration example of a PON system as an exemplary embodiment of this invention;
Fig. 2 is a block diagram showing a configuration example of an OLT according to a first embodiment of this invention;
Fig. 3 is a diagram shown an example of signals received from ONUs obtained by a light receiving element:
Fig. 4 is a diagram showing an example of correspondence relationships between received light level and amplification degree in the conversion table shown in Fig. 2;
Fig. 5 is a diagram showing an example of amplification degree correction performed on received signals from the ONUs according to the first embodiment of this invention;
Fig. 6 is a block diagram showing a configuration example of an OLT according to a second embodiment of this invention; and
Fig. 7 is a diagram showing an example of threshold value correction performed on received signals from the ONUs according to the second embodiment of this invention.

The exemplary embodiment is designed to achieve improvement of light-receiving sensitivity by the OLT adjusting the amplification degrees or threshold values based on reception levels of received signals from ONUs.

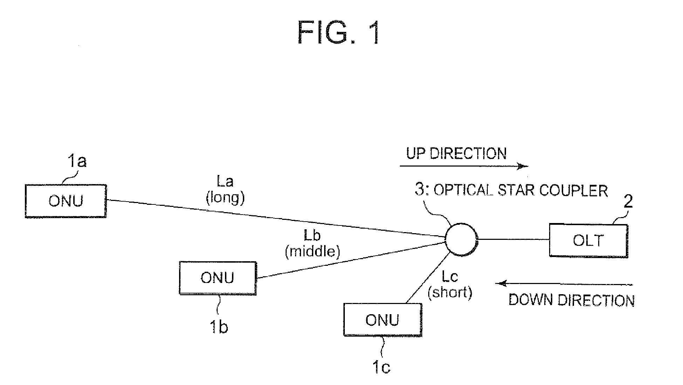

Fig. 1 shows a configuration example of a PON system according to this exemplary embodiment.

An OLT 2 is communicably connected to three ONUs 1a, 1b, 1c via optical transmission paths formed of optical fibers and an optical star coupler (branch) 3. The distances La, Lb, Lc between the OLT 2 and the respective ONUs 1a, 1b, 1c generally differ from each other. In the example shown in Fig. 1, the relationship of La>Lb>Lc is established, and thus the ONU 1a is located at the longest distance from the OLT 2. The differences in the distance between the OLT 2 and the ONUs may be observed as differences in the level of received signals (received light level) on the OLT 2 side.

Since the transmission level of the OLT 2 is the same for the ONUs, the ONUs 1a, 1b, 1c receive, at their reception inputs, signals of different received light levels according to their distances from the OLT 2. Since the ONUs 1a, 1b, 1c transmit transmitting signals of the same level, the OLT 2 receives, at its reception input, burst signals having various level differences.

### [First Embodiment]

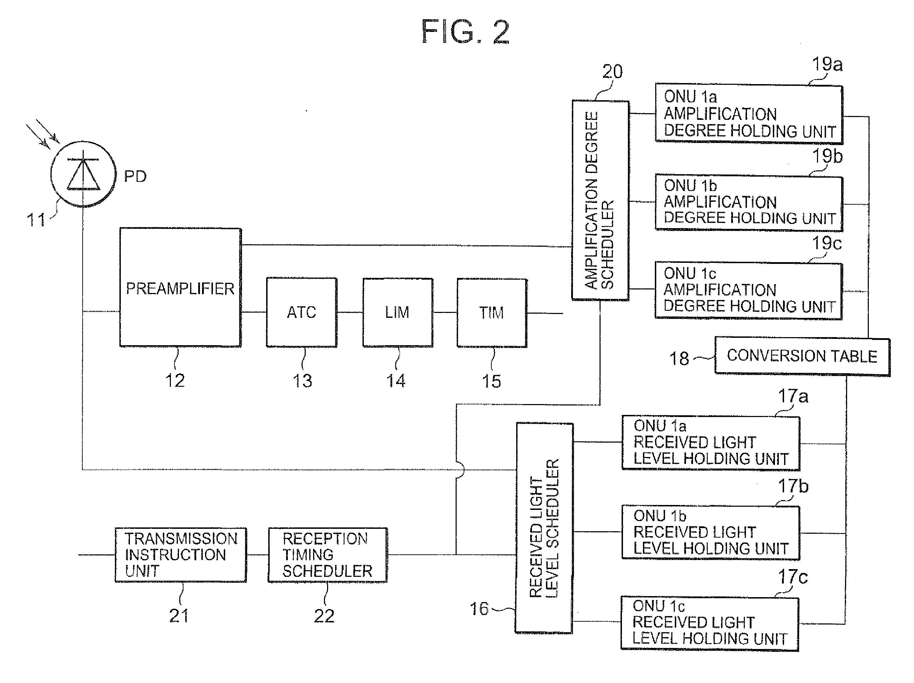

A configuration of an OLT 2 according to a first embodiment of this invention will be described with reference to Fig. 2.

The OLT 2 includes a light receiving element (PD) (reception unit) 11 for converting an optical signal into an electrical signal, a preamplifier 12 for amplifying a low-level electrical signal output by the PD 11, and an automatic threshold control circuit (ATC) 13 for further amplifying and stabilizing the amplified received signal. The OLT 2 further includes a limit amplifier (LIM) 14 for limiting the pulse amplification of received signals to uniform the amplitudes, and a timing circuit (TIM) 15 for retiming a pulse train of received signals and outputting the retimed pulse train to a subsequent device (not shown). The OLT 2 further includes an ONU 1a received light level holding unit 17a for holding the level of light received from the ONU 1a, an ONU 1b received light level holding unit 17b for holding the level of light received from the ONU 1b, and an ONU 1c received light level holding unit 17c for holding the level of light received from the ONU 1c.

The OLT 2 further includes a received light level scheduler (reception level measurement unit) 16 which receives an output signal from the PD 11, and outputs the received signal to one of the ONU 1a received light level holding unit 17a, the ONU 1b received light level holding unit 17b, and the ONU 1c received light level holding unit 17c selected according to a reception timing by a subsequent device (not shown) so that the signal is held by the selected holding unit.

The OLT 2 further includes a conversion table 18 for converting the received light levels held in the received light level holding units into amplification degrees. The conversion table 18 is used to convert the received light levels held in the received light level holding units 17a, 17b, 17c into amplification levels for the signals received from the ONUs 1a, 1b, 1c.

The OLT 2 further includes an ONU 1a amplification degree holding unit 19a for holding the amplification level for a signal received from the ONU 1a, an ONU 1b amplification degree holding unit 19b for holding the amplification level for a signal received from the ONU 1b, and an ONU 1c c amplification degree holding unit 19c for holding the amplification level for a signal received from the ONU 1c. The OLT 2 further includes an amplification degree scheduler 20 which selects one of the amplification level for the signal received from the ONU 1a, the amplification level for the signal received from the ONU 1b, and the amplification level for the signal received from the ONU 1c, according to a transmission timing from the subsequent device (not shown).

Still further, the OLT 2 includes a transmission instruction unit 21 which gives instruction to the ONUs 1a, 1b, 1c on transmission timings of signals, and a reception timing scheduler 22 which manages the reception timings of the signals from the ONUs 1a, 1b, 1c based on the contents of the instruction for the transmission timings.

A configuration for transmitting transmission instruction control signals to the ONUs 1a, 1b, 1c by the transmission instruction unit 21 is well known, and hence description thereof will be omitted here.

Next, operation of the first embodiment will be described with reference to Figs. 1 to 5.

As shown in Fig. 1, burst signals from the OLT 2 are sequentially transmitted to the ONUs 1a, 1b, 1c.

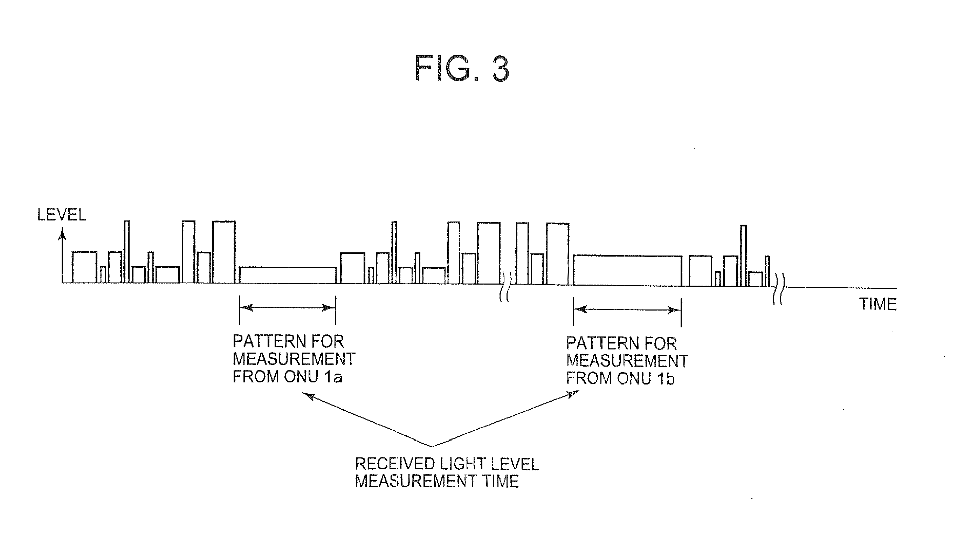

In the first embodiment, patterns for measurement are transmitted from the ONUs 1a, 1b, 1c within guard time periods set between data transmitted by the ONUs 1a, 1b, 1c (no-signal regions between burst signals) like the two time periods shown in Fig. 3, and levels of the received signals (received light levels) are measured based on these patterns for measurement.

A data input time period longer than a certain time period T is required in order to measure the received light levels. However, it rarely happens in normal reception that a signal is received continuously for a period of time longer than the time period T. In the first embodiment, therefore, the transmission instruction unit 21 gives instruction to the ONUs 1a, 1b, 1c to force them to transmit patterns for measurement for a time period longer than the time period T, so that a time period long enough to measure the received light levels is ensured and the measurement of the received light levels is made possible.

It is preferable that a time period of 157 µs or more be ensured for the measurement of the received light levels by means of the pattern for measurement.

During the received light level measurement time, the received light level scheduler 16 causes, according to a reception timing by the subsequent device (not shown), the ONU 1a received light level holding unit 17a for holding the received light level from the ONU 1a, or the ONU 1b received light level holding unit 17b for holding the received light level from the ONU 1b, or the ONU 1c received light level holding unit 17c for holding the received light level from the ONU 1c, to hold the received light level of a signal received from the PD 11.

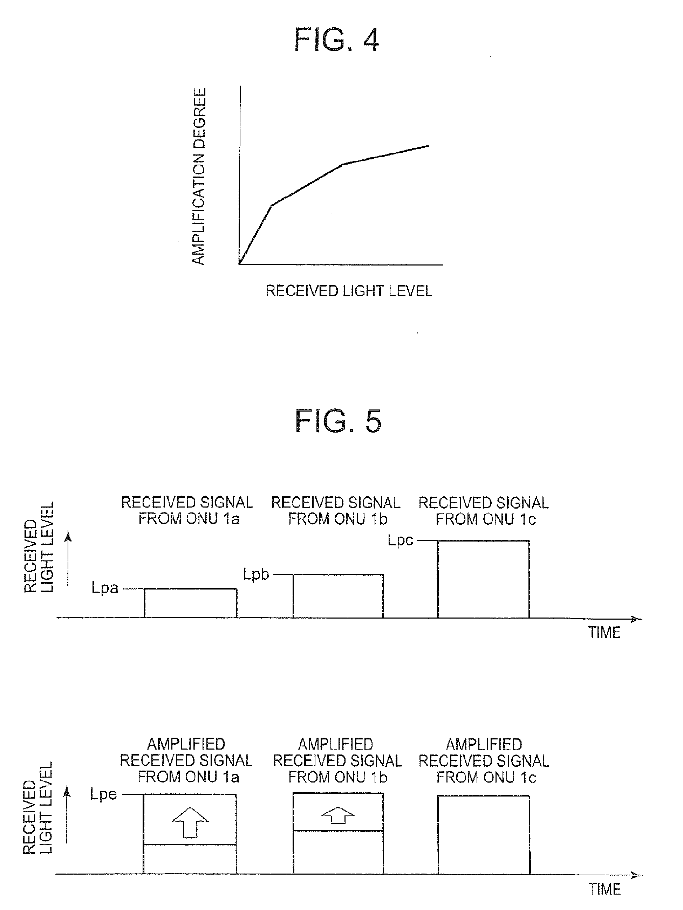

The received light level is converted into an amplification degree by a conversion table (recognition method conversion table) 18 for converting a received light level into an amplification degree. There is prestored in the conversion table 18 correspondence relationships between received light levels and amplification degrees, for example, as shown in Fig. 4.

Referring to the conversion table 18, the OLT 2 converts the received light level data of the ONU 1a received light level holding unit 17a holding the level of light received from the ONU 1a into an amplification level of a signal from the ONU 1a, and the amplification level is held in the ONU 1a amplification degree holding unit 19a.

The OLT 2 also converts the received light level data of the ONU 1b received light level holding unit 17b holding the level of light received from the ONU 1b into an amplification level of a signal from the ONU 1b, and the amplification level is held in the ONU 1b amplification degree holding unit 19b. The OLT 2 also converts the received light level data of the ONU 1c received light level holding unit 17c holding the level of light received from the ONU 1c into an amplification level of a signal from the ONU 1c, and the amplification level is held in the ONU 1c amplification degree holding unit 19c.

During normal reception of data from the ONUs 1a, 1b, 1c, the OLT 2 selects amplification degrees by means of the amplification degree scheduler 20 according to the transmission timing from the subsequent device (not shown), and inputs the amplification degrees Aa, Ab, Ac corresponding to the ONUs 1a, 1b, 1c for performing data transmission, to the preamplifier 11 according to the transmission timing from the subsequent device (not shown), whereby the correction shown in Fig. 5 is enabled.

Thus, the preamplifier 12, the received light level holding units 17a to 17c, the amplification degree holding units 19a to 19c, the conversion table 18, and the amplification degree scheduler 20 may be collectively referred to as a recognition control unit.

In Fig. 5, the relationship among the received light levels Lpa, Lpb, Lpc from the ONUs 1a, 1b, 1c is represented as Lpa<Lpb<Lpc since the relationship of the distances of the received signals are represented as La>Lb>Lc. In this case, the amplification degree holding units 19a, 19b, 19c respectively hold the amplification degrees Aa, Ab, Ac (provided that Aa>Ab>Ac). The preamplifier 12 performs amplification based on the amplification degrees Aa, Ab, Ac selected by the amplification degree scheduler 20 so that the received light levels Lpa, Lpb, Lpc of the signals received from the ONUs 1a, 1b, 1c are amplified to be equal to the same received light level Lpe. This makes it possible to define a wide light receiving dynamic range.

### [Second Embodiment]

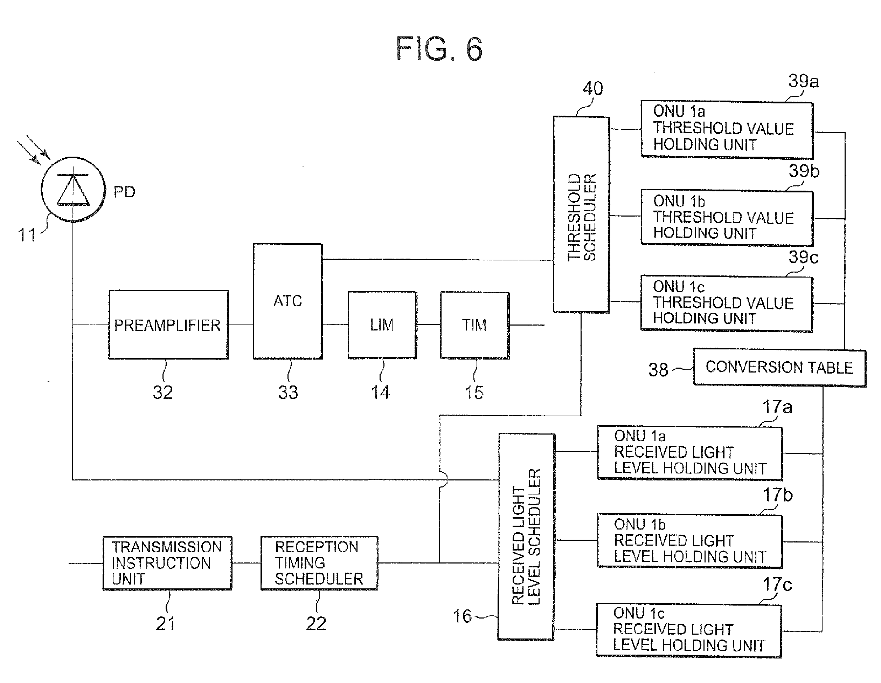

Next, a configuration of an OLT 2 according to the second embodiment of this invention will be described with reference to Fig. 6. In Fig. 6, like elements to those shown in Fig. 2 are indicated by like reference numerals.

The OLT 2 includes a light receiving element (PD) 11 for converting an optical signal into an electrical signal, a preamplifier 32 for amplifying a low-level electrical signal output by the PD 11, an automatic threshold control circuit (ATC) 33 for amplifying and stabilizing the amplified received signal, a limit amplifier (LIM) 14 for limiting the pulse amplification of received signals to uniform the amplitudes thereof, and a timing circuit (TIM) 15 for retiming the pulse train of the received signals and outputting the retimed pulse train to a subsequent device (not shown).

Like the one of the first embodiment, the OLT 2 further includes an ONU 1a received light level holding unit 17a for holding the level of light received from the ONU 1a, an ONU 1b received light level holding unit 17b for holding the level of light received from the ONU 1b, and an ONU 1c received light level holding unit 17c for holding the level of light received from the ONU 1c.

The OLT 2 further includes a conversion table 38 for converting the received light levels held in the received light level holding units 17a, 17b, 17c into threshold values for allowing the ATC 33 to recognize the received signals.

The OLT 2 further includes an ONU 1a threshold value holding unit 39a for holding a threshold value for a signal received from the ONU 1a, an ONU 1b threshold value holding unit 39b for holding a threshold value for a signal received from the ONU 1b, and an ONU 1c threshold value holding unit 39c or holding a threshold value for a signal received from the ONU 1c. The OLT 2 further includes a threshold scheduler 40 which selects one of the threshold values for the signals received from the ONU 1a, 1b, 1c according to a transmission timing from a subsequent device (not shown).

Further, the OLT 2 includes a transmission instruction unit 21 which gives instruction to the ONUs 1a, 1b, 1c on transmission timings of signals, and a reception timing scheduler 22 which manages the reception timings of the signals from the ONUs 1a, 1b, 1c based on the contents of the instruction of the transmission timings.

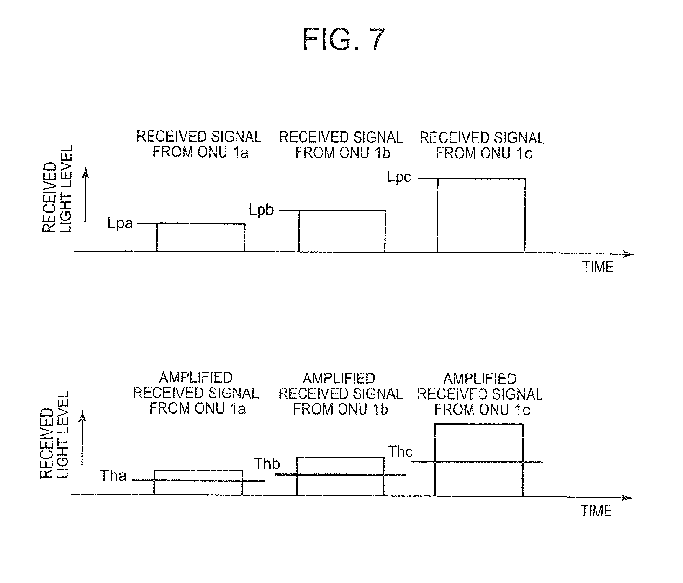

Next, operation of the second embodiment will be described with reference to Figs. 6 and 7.

As shown in the example of Fig. 1, bust signals are transmitted from the OLT 2 sequentially to the ONUs 1a, 1b, and 1c.

In the second embodiment, likewise the first embodiment described above, patterns for measurement are transmitted from the ONUs 1a, 1b, 1c within guard time periods set between data transmitted by the ONUs 1a, 1b, 1c (no-signal regions between burst signals) like the two time periods shown in Fig. 3, and levels of the received signals (received light levels) are measured based on these patterns for measurement.

According to the second embodiment, likewise the first embodiment described above, the transmission instruction unit 21 gives instruction to the ONUs 1a, 1b, 1c to force them to transmit patterns for measurement over a time period longer than the time period T, so that a time period long enough to measure the received light levels is ensured and the measurement of the received light levels is made possible. It is preferable that a time period of 157 µs or more be ensured for the measurement of the received light levels by using the pattern for measurement.

During the received light level measurement time, the received light level scheduler 16 causes, according a reception timing by the subsequent device (not shown), the ONU 1a received light level holding unit 17a for holding the received light level from the ONU 1a, or the ONU 1b received light level holding unit 17b for holding the received light level from the ONU 1b, or the ONU 1c received light level holding unit 17c for holding the received light level from the ONU 1c, to hold the received light level of a signal received from the PD 11.

The received light level is converted into a threshold value by referring to a conversion table (recognition method conversion table) 38 for converting received light levels into threshold values for received signals. There are prestored in the conversion table 38 correspondence relationships between the received light levels and the threshold values.

Referring to the conversion table 38, the OLT 2 converts the received light level data of the ONU 1a received light level holding unit 17a for holding the received light level from the ONU 1a into a threshold value for a received signal from the ONU 1a. and the threshold value is held in the ONU 1a threshold value holding unit 39a. Likewise, the OLT 2 converts the received light level data of the ONU 1b received light level holding unit 17b for holding the received light level from the ONU 1b into a threshold value for a received signal from the ONU 1b, and the threshold value is held in the ONU 1b threshold value holding unit 39b. The OLT 2 converts the received light level data of the ONU 1c received light level holding unit 17c for holding the received light level from the ONU 1c into a threshold value for a received signal from the ONU 1c, and the threshold value is held in the ONU 1c threshold value holding unit 39c.

During normal reception of data from the ONUs, the OLT 2 selects threshold values by means of the threshold scheduler 40 according to a transmission timing from the subsequent device (not shown), and inputs the threshold values Tha, Thb, The corresponding to the ONU 1a, 1b, 1c for performing data transmission, to the ATC 33 according to the transmission timing from the subsequent device (not shown) so that the discrimination as shown in Fig. 7 is made possible.

Thus, the preamplifier 32, the received light level holding units 17a to 17c, the threshold value holding units 39a to 39c, the conversion table 38, and the threshold scheduler 40 may be collectively referred as a recognition control unit.

As shown in Fig. 7, the relationship among the received light levels Lpa, Lpb, Lpc from the ONUs 1a, 1b, 1c is represented as Lpa<Lpb<Lpc since the distances of the received signals are represented as La>Lb>Lc. In this case, the amplification degree holding units 39a, 39b, 39c respectively hold the threshold values Tha, Thb, The (provided that Tha<Thb<Thc). The ATC 33 discriminates the received signals according to the threshold values Tha, Thb, The selected by the threshold scheduler 40. This makes it possible to define a wide light receiving dynamic range.

### [Advantageous Effects of the Embodiments]

According to the embodiments as described above, the OLT 2 is enabled to reliably measure the received light levels from a plurality of ONUs, by causing each of the ONUs to transmit a measurement pattern continuing for a predetermined time or longer for the measurement of the received light level in an interval when no actual data is transmitted. Thus, the OLT 2 is capable of performing highly accurate reception control without significant need of high-speed responsibility or wide light receiving dynamic range.

In other words, the optical reception circuit of the OLT is capable of reliably measuring received light levels by using patterns for measurement within the guard time (no-signal regions between burst signals) in order to receive optical burst signals having different received light levels caused by differences in distance between the OLT and the ONUs as shown in Fig. 1.

This makes it possible to achieve a wide light receiving dynamic range and to improve the performance without the need of burst signal level tracking or high-speed operation.

In other words, this wideness of the light receiving dynamic range makes it possible to accommodate long distances and great differences in distances.

It should be understood that the foregoing relates to only referred embodiments of the present invention, and the invention is not limited to these embodiments, since the invention can be embodied or carried out in various other ways based on its technical idea.

For example, although the description of the embodiments above has been made in terms of an example in which three ONUs are provided, the number of the ONUs may be any value in a range of values predetermined as the number of ONUs that can be accommodated by the OLT.

Further, the procedures for realizing the OLT described in the embodiments above may be recorded as a program on a recording medium so that the functions according to the embodiments of this invention can be realized by the program read out from the recording medium causing the CPU of a computer included in the system to execute the processing.

The present invention is also applicable to a case in which a group of information including the program is supplied to an output device not only from the recording medium as described above, but also from an external recording medium through the network.

This means that the program code read from the recording medium realizes the new functions of this invention, and thus the recording medium recording the program code and the signals read from the recording medium also constitute the present invention.

The recording medium may be, for example, a flexible disk, hard disk, optical disk, magneto-optical disk, CD-ROM, CD-R, CD-RW, DVD-ROM, DVD-RAM, DVD-RW, DVD+RW, magnetic tape, non-volatile memory card, ROM, or the like.

The program according to this invention is capable of causing an OLT controlled by the program to realize the functions in the embodiments described above.

## Claims

1. A station device which is used by being connected to a plurality of subscriber devices, comprising:
a reception unit that receives signals from the subscriber devices;
a reception level measurement unit that measures the levels of reception by the reception unit;
a transmission instruction unit that causes each of the subscriber devices to transmit a pattern for measurement continuing for a predetermined time in an interval when no data is transmitted by the subscriber devices; and
a recognition control unit that controls a signal recognition method for a signal received from the subscriber device based on the reception level of the pattern for measurement transmitted from the subscriber device and measured by the reception level measurement unit.

2. The station device as claimed in Claim 1, wherein the control of the signal recognition method is performed by control of amplification degrees of the signals received by the reception unit; and
the recognition control unit comprises storing units for the respective subscriber devices that store the levels of the optical signals received from the subscriber devices and the amplification degrees of the signals received from the subscriber devices.

3. The station device as claimed in Claim 1, wherein the control of the signal recognition method is performed by control of threshold values for recognizing signals received by the reception unit; and
the recognition control unit comprises storing units for the respective subscriber devices that store the levels of optical signals received from the subscriber devices and the threshold values for the signals received from the subscriber devices.

4. The station device as claimed in Claim 2, wherein the recognition control unit comprises a recognition method conversion table in which the levels of the optical signals received from the subscriber devices are associated with the amplification degrees, and performs control of the amplification degrees by referring to the recognition method conversion table.

5. The station device as claimed in Claim 3, wherein the recognition control unit comprises a recognition method conversion table in which the levels of the optical signals received from the subscriber devices are associated with the threshold values, and performs control of the threshold values by referring to the recognition method conversion table.

6. An optical communication system comprising a station device as claimed in any one of Claims 1 to 5, and a plurality of subscriber devices connected to the station device via optical transmission paths.

7. A reception control method for a station device which is used by being connected to a plurality of subscriber devices, the method comprising:
a transmission instruction step of causing each of the subscriber devices to transmit a pattern for measurement continuing for a predetermined time in an interval when no data is transmitted by the subscriber devices;
a reception level measurement step of measuring the reception level of the pattern for measurement; and
a recognition control step of controlling a signal recognition method for a signal received from the subscriber device based on the reception level of the pattern for measurement received from the subscriber device and measured by the reception level measurement step.

8. The reception control method as claimed in Claim 7, wherein the control of the signal recognition method is performed by control of the amplification degrees of signals received from the subscriber devices; and
in the recognition control step, the levels of the optical signals received from the subscriber devices and the amplification degrees of the signals received from the subscriber devices are stored in storing units provided for the respective subscriber devices, and the amplification degrees of the signals received from the subscriber devices are controlled based on the information on the subscriber devices stored in the storing units.

9. The reception control method as claimed in Claim 7, wherein the control of the signal recognition method is performed by control of the threshold values for recognizing signals from the subscriber devices; and
in the recognition control step, the levels of the optical signals received from the subscriber devices and the threshold values for the signals received from the subscriber devices are stored in storing units provided for the respective subscriber devices, and the threshold values for the signals received from the subscriber devices are controlled based on the information on the subscriber devices stored in the storing units.

10. The reception control method as claimed in Claim 8, wherein in the recognition control step, the control of the amplification degrees is performed based on a recognition method conversion table in which the levels of the optical signals received from the subscriber devices are associated with the amplification degrees.

11. The reception control method as claimed in Claim 9, wherein in the recognition control step, the control of the threshold values is performed based on a recognition method conversion table in which the levels of the optical signals received from the subscriber devices are associated with the threshold values.
